# EUROPEAN PATENT APPLICATION

(11) **EP 2 400 146 A2**
(43) Date of publication of application: **28.12.2011**
(21) Application number: 11382215.9
(22) Date of filing: 28.06.2011
(51) Int. Cl.: F03B 13/20

(54) **Float for an offshore pendulum generator**

(30) Priority: 28.06.2010 ES 201030993
(71) Applicant: Novedades Tecnologicas S.L., 39002 Santander Cantabria (ES)
(72) Inventor: Gómez Jáuregui, Valentín, 39002 Santander (Cantabria) (ES); Jáuregui Carro, Francisco, Javier, 39002 Santander (Cantabria) (ES)
(74) Representative: Carpintero Lopez, Francisco

(57) **Abstract**

The invention relates to a float for an offshore pendulum generator which allows efficiently harnessing minimum movements of waves, consisting of a hull having an underwater body of little depth and diameter appreciably less than that of the deck, on which deck the structure supporting the pendulum and the elements on which it acts for converting kinetic energy into electric energy is located, a perimetric ballast weight preferably located between the deck and the hull which increases the stability of the assembly and generates considerable energy in the rolls.

## Description

### Object of the Invention

The present invention is comprised in the field of floats for electric power generators using the movement of waves and it particularly provides very relevant advantages in floats used in offshore pendulum generators.

### Background of the Invention

Today in the search for alternative energies, there is great interest in harnessing energy from waves, tides, river currents and others. Different systems which allow generating electric energy from the movement of waves have particularly been developed and continue to be developed.

One of these devices is disclosed in patent ES 2,231,041, consisting of a structure assembled on a float which is anchored to the seabed. The aforementioned structure supporting a large-sized pendulum mass capable of oscillating in any direction within 360° or in directions guided by auxiliary elements is located on the deck of the float. When oscillating, the pendulum hits against devices for converting the kinetic energy of the pendulum into mechanical energy and the latter into electric energy, said devices being located circumferentially along the entire inner perimeter of the floating structure, or at selective points where the pendulum is going to hit when its oscillation is guided.

In other embodiment variants, the pendulum interacts with elements for converting the mechanical energy into electric energy, as is the case when the pendulum acts as an electric inductor which is displaced parallel and close to a static armature arranged on the deck of the float, the curvatures of both the inductor and the armature being the same and having the same radius.

### Description of the Invention

It has been demonstrated that the shape and structure of the float very decisively affects the performance of the pendulum generator, taking into account that the pendulum effect is a consequence of the roll of the float.

In this sense, the objective is to obtain a float for a pendulum generator in which as a consequence of its shape, weight and dimensions, roll movements are achieved with minimum undulations on the surface of the water in which the float is anchored.

On the other hand, it is evident that the greater the total weight of the pendulum generator, the greater will be the energy generated in its roll and it is precisely that energy that is to be harnessed for being converted into electric energy.

Therefore, to optimize the performance of a pendulum generator assembled on a float, it is necessary for the float to be active with minimum undulating movements of the sea surface and for its roll to release maximum energy so that, in combination with the pendulum mass, maximum electric energy is generated.

In comparing a float to a ship, ships are very stable and generate considerable energy in their rolls, which are short and very rapid. These particular characteristics are not desirable for a pendulum float, in which wide and slower rolls but with considerable energy are sought.

Therefore, taking the foregoing into account, the pendulum float must have considerable stability so that in its roll maximum force is developed, and it must have considerable weight because the intensity of the developed force will depend on this weight.

In accordance with the aforementioned, it must be pointed out that in the specific case of a float for a pendulum generator, it is highly advisable that it have considerable stability (to generate considerable energy in its rolls) and wide and slow rolls.

In seeking to meet these demands, the generator object of the present invention has two clearly distinguished areas. Firstly, it has an underwater body (submerged part) area of little depth having a diameter appreciably less than that of the deck per se. A preferably convex-curved surface extends between the underwater body area and the deck, forming what could be called the visible hull of the float.

In the upper part of the hull, preferably below the deck area, there is a large ballast weight completely or partially surrounding the perimeter of the hull. This ballast weight means that the center of gravity of the assembly consisting of the aforementioned float and the structure supporting the pendulum is located in a plane comprised within the ring formed by the ballast weight, such that without altering the stability of the assembly, it causes strong inertias in the rolls.

This perimetric ballast weight can be in the interior or exterior of the hull, i.e., it can be inside or outside the hull. The perimetric ballast weight can also be a continuous ring made of a heavy material or it can be formed by discontinuous sectors.

Therefore, since the diameter of the underwater body is less than that of the deck, considerable roll sensitivity is achieved such that with minimum agitation of the water, i.e., with minimum undulation on of the sea surface, the float rolls.

This construction of the float with little depth, small dimensions of the submerged part and considerable weight additionally causes minimum friction with the water in the rolls, benefiting system performance.

At the same time, the surface of the float which is called the hull, i.e., the surface extending between the underwater body and the deck, operates in cases of excessive rolls (due to storms or very adverse sea conditions) so that when heeling up, this surface serves as a stability and buoyancy reserve which would stop the excessive roll of the float and return it to the counterroll.

### Description of the Drawings

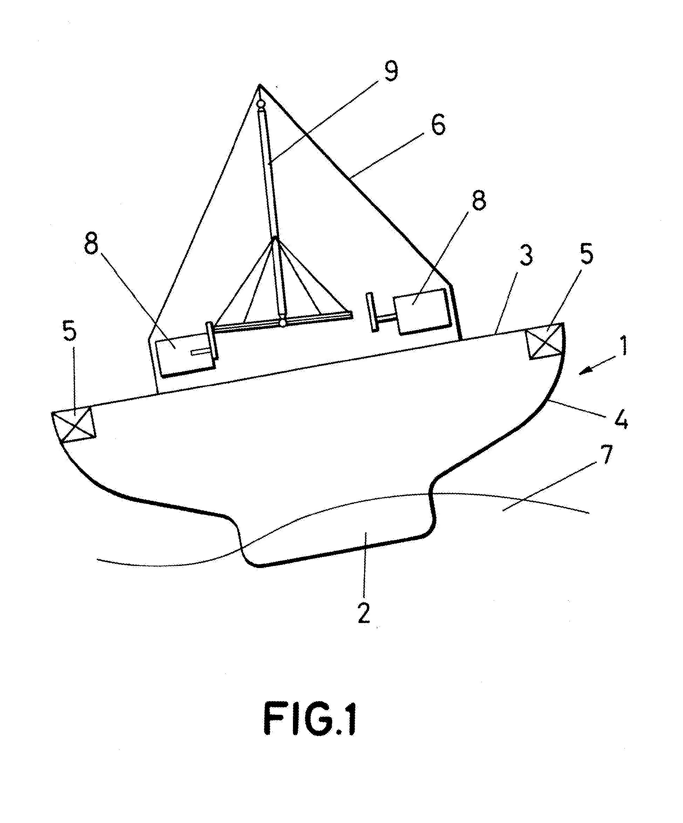

To complete the description being made and for the purpose of aiding to better understand the features of the invention according to a preferred practical embodiment thereof, a single Figure 1 depicting a schematic side elevational view of the float is attached as an integral part of said description.

### Preferred Embodiment of the Invention

In view of the sole Figure 1 contemplated in this description, it can be observed how the float (1) floating in a body of water (7) has an underwater body area (2), a deck (3) and a preferably convex-curved hull surface (4) between both.

As can be inferred from the drawing which illustrates the invention, the diameter of the underwater body (2) is clearly less than the diameter of the deck (3) and the hull (4) per se forming a large protuberance acting as a stability and buoyancy reserve against excessive rolls created in the most adverse sea conditions extends between both.

A ballast weight (5) is located between the deck (3) and the upper part of the hull (4) completely or partially extending along the entire perimeter of the float. That ballast weight can form a continuous ring or discontinuous ring made of a heavy material. In any case, this ballast weight (5) means that the center of gravity of the float is located in a plane inside that of the perimetric ballast weight.

As indicated above, the ballast weight can be on the interior or exterior of the hull. In the drawing illustrating the invention, the ballast weight (5) is depicted as placed against the inner perimeter of the hull (4).

The structure (6) supporting the pendulum (9) per se and the means (8) converting the kinetic energy generated by the pendulum in its alternating impact with said means into electric energy is located on top of the float (1).

The underwater body of less diameter allows obtaining minimum friction and considerable roll sensitivity. The ballast weight (5) also provides the float with considerable stability and produces maximum energy in the roll.

According to the Government's port studies and statistics on the swell in the Cantabrian Sea, a suitable float for achieving good performance which is safe for the integrity thereof in very adverse sea conditions could have the following dimensions:
Lower diameter: 45 m
Upper diameter: 65 m
Float height: 20 m
Cone height: 35 m
Total weight: 5000 tons.

These dimensions and weight can naturally vary in other seas and in other conditions.

## Claims

1. Float for an offshore pendulum generator, **characterized in that** it comprises:
a) an underwater body or submerged part of little depth which allows obtaining minimum friction with the water and considerable roll sensitivity
b) a deck of a diameter appreciably greater than that of the underwater body on which the structure supporting the pendulum and the means for converting the kinetic energy of the pendulum into electric energy are assembled,
c) a hull between the deck and the underwater body as a reserve buoyancy in excessive rolls,
d) a perimetric ballast weight arranged between the deck and the hull to increase the stability and generate considerable energy in the rolls.

2. Float for an offshore pendulum generator according to claim 1, **characterized in that** the ballast weight is located between the deck and the hull and forms a continuous circumferential mass.

3. Float for an offshore pendulum generator according to claims 1 and 2, **characterized in that** the ballast weight forms a discontinuous circumferential mass.

4. Float for an offshore pendulum generator according to the preceding claims, **characterized in that** the ballast weight can be located in the interior or exterior of the hull.
